# EUROPEAN PATENT SPECIFICATION

(11) **EP 0 557 425 B1**
(45) Date of publication and mention of the grant of the patent: **16.04.1997**
(21) Application number: 92900526.2
(22) Date of filing: 13.11.1991
(51) Int. Cl.: A21C 9/04, A23P 1/08, A21D 13/00

(54) **METHOD OF MAKING A PIZZA, PIZZA TOPPINGS DISK AND APPARATUS FOR MAKING SAME**
VERFAHREN ZUR HERSTELLUNG EINER PIZZA, PIZZATOPPINGSCHEIBE UND VORRICHTUNG ZUR HERSTELLUNG DERSELBEN
PROCEDE DE PREPARATION DE PIZZA, DISQUE DE GARNITURE ET APPAREIL SERVANT A PRODUIRE CE DISQUE

(30) Priority: 13.11.1990 US 613249; 16.08.1991 US 746657
(43) Date of publication of application: 01.09.1993
(73) Proprietor: PIZZA HUT, INC., Wichita, KS 67201 (US)
(72) Inventor: MCDONALD, Jane, M., Louisville, KY 40205 (US); BINGHAM, Lynn, R., Sapulpa, OK 74066 (US); HIGGINS, Lori, B., Coralville, IA 52241 (US); JENNINGS, Kathryn, M., Brownton, MN 55312 (US); KOEPPE, Susan, Omaha, NB 68046 (US); O'NEILL, Edward, Fort Wayne, IN 46804 (US); MOSHIER, Mark W., c/o Tyson R. & T. Center, Springdale, AR 72764-07656 (US); BEHM, Larry, R., Wichita, KS 67206 (US); JAAX, Susan, L. Rural Route 1, Garden Plain, KS 67050 (US)
(74) Representative: Bayliss, Geoffrey Cyril
(86) International application number: US9108464
(87) International publication number: WO9208358

(56) References cited:
- EP-A- 0 168 118
- AU-B- 1 162 383
- GB-A- 1 280 611
- GB-A- 2 000 010
- GB-A- 2 223 391
- JP-A- 1 108 959
- JP-A-57 012 963
- US-A- 3 503 345
- US-A- 3 648 596
- US-A- 3 735 692
- US-A- 3 760 715
- US-A- 4 112 834
- US-A- 4 152 976
- US-A- 4 159 349
- US-A- 4 197 794
- US-A- 4 206 239
- US-A- 4 293 296
- US-A- 5 009 867
- US-A- 5 023 096

## Description

### BACKGROUND OF THE INVENTION

The present invention relates to the field of pizzas and pizza toppings. More particularly, the invention relates to methods and apparatus for assembling pizza ingredients to form pizza toppings disks and pizzas using pizza toppings disks.

The preparation and cooking of pizzas in the food industry requires numerous labor intensive steps. For example, pizza dough is prepared and formed into a shell. Also, the cheese and pizza toppings are applied to the shell one at a time. In addition, in a pizza restaurant delivery and/or carryout business each ingredient that is added as a topping is typically measured or weighed to insure uniformity of the finished product. Naturally, these several steps add to the cost and the time it takes to prepare the products.

Assuring uniformity of pizzas made by different employees can also be a challenge for the pizza restaurant, delivery, and/or carryout business. In addition, lack of uniformity affects cost control. Even small additional amounts of ingredients over the specified quantity add up over time to large additional expenses for a pizza restaurant delivery, and/or carryout business.

Products and methods have been developed attempting to reduce the cost and increase the speed and uniformity of preparing pizzas.

For instance, U.S. Patent No. 4,159,349 to Caiello discloses a pizza and method that includes using up to four geometrically congruent slices of pizza cheese having apertures. The slices are arranged to form one layer to cover the pizza shell.

U.S. Patent 4,066,796 to McKee discloses a pizza coating product containing a water-soluble algin, preferably for use with a frozen pizza. The water-soluble algin is applied to the surface of the pizza dough that forms the pizza crust prior to the addition of any toppings or tomato sauce.

U.S. Patent 4,753,815 to Kielsmeier, et al., discloses a method of preparing and quick freezing cheese in granular form to maintain granule moisture. The cheese granules are then baked on the pizza in a frozen or partially frozen condition.

U.S. Patent 4,283,431 to Giordano, et al., discloses a method of making a double-layered pizza product. The method disclosed uses two layers of pastry dough with traditional pizza toppings placed in between the pastry layers before baking the pizza.

### SUMMARY OF THE INVENTION

Briefly stated, the present invention is a pizza toppings disk, as well as a method and apparatus for making a pizza toppings disk and a pizza using a pizza toppings disk.

In accordance with the present invention a pizza is made by combining a quantity of cheese with a plurality of pizza toppings that may include but are not limited to the following items: sliced meats, ground meats, or vegetables, as well as combinations thereof. The quantity of cheese and selected pizza toppings are combined into a layer that is appropriately shaped to be placed on a pizza shell. The cheese and the selected pizza toppings are fused together to form a pizza toppings disk that is stored for subsequent use in assembling a pizza. A pizza shell is provided and an uncooked pizza is formed by assembling the pizza toppings disk and the pizza shell. The toppings disk and the shell are then baked to provide a pizza.

In a preferred embodiment of the present invention a quantity of cheese is distributed over a forming surface to form a layer of cheese. Applied on top of this layer of cheese are selected amounts of typically requested pizza toppings. The layer of cheese and the selected pizza toppings are then fused together to form a pizza toppings disk that is stored for subsequent use in assembling a pizza.

In another preferred embodiment of the present invention, a second quantity of cheese is distributed on top of a first layer of cheese and selected pizza toppings to form a second layer of cheese. The layers of cheese and the pizza toppings are then fused together to form a pizza toppings disk. The toppings disk may then be stored for subsequent use.

In another preferred embodiment of the present invention a third quantity of cheese is mixed with the selected plurality of pizza toppings prior to applying these toppings to a first layer of cheese.

In making a pizza in accordance with the present invention a pizza shell is provided. An uncooked pizza is formed by assembling the toppings disk and the pizza shell. The toppings disk and pizza shell are then baked to provide a pizza.

In one aspect, the present invention discloses an apparatus for depositing onto forming surfaces a quantity of cheese and a plurality of pizza toppings that may include but are not limited to the following items: sliced meats, ground meats, or vegetables, as well as combinations thereof. The quantity of cheese and the plurality of pizza toppings are deposited onto a conveyor having a forming surface. A fusing means fuses the quantity of cheese and plurality of pizza toppings to form a pizza toppings disk that is stored for subsequent use in assembling a pizza.

In this preferred embodiment of the present invention, a conveyor means transports a plurality of forming surfaces under a plurality of depositing means. The depositing means deposit cheeses and selected amounts of typically requested pizza toppings onto the forming surfaces. As the components of cheese and typically requested pizza toppings are deposited onto the forming surfaces from the depositing means they cascade through a template conveyor means. The template conveyor means is configured such that as the components fall onto the forming surfaces a specific pattern is formed. The components are then fused together to form a pizza toppings disk that is frozen for storage and subsequent use in assembling a pizza.

In another preferred embodiment of the present invention a quantity of cheese is deposited onto a forming surface to form a layer of cheese. Deposited on top of this layer of cheese are selected amounts of typically requested pizza toppings. The layer of cheese and the selected pizza toppings fall through a template conveyor means and form a specific pattern on the forming surfaces as they are deposited. The components are then fused together to form a pizza toppings disk that is frozen for storage and subsequent use in assembling a pizza.

In another preferred embodiment of the present invention, a second quantity of cheese is deposited on top of a first layer of cheese and selected pizza toppings to form a second layer of cheese. The layers of cheese and the pizza toppings are deposited from a depositing means through a template conveyor means such that a specific pattern is formed as they are deposited on the forming surfaces. The components are then fused together to form a pizza toppings disk. The toppings disk is frozen for storage and subsequent use.

In another preferred embodiment of the present invention a sliced meat depositing means deposits on the forming surfaces a quantity of sliced meats. The sliced meats deposited are deposited in a predetermined pattern on the forming surfaces.

In making a pizza in accordance with the present invention a pizza shell is provided. An uncooked pizza is formed by assembling the toppings disk and the pizza shell. The toppings disk and pizza shell are then baked to provide a pizza.

The present invention offers several advantages for a pizza restaurant, delivery and/or carryout business. Some advantages include greater cost control, increased labor savings, convenience, better uniformity of pizzas made by different employees, and closer control over the final product because a pizza toppings disk can be made prior to when a pizza is ordered. Pizza toppings disks can be made at a centralized location. Preparing the toppings disks at a centralized location can reduce the preparation space necessary to make an assembled pizza on site at pizza restaurants, deliveries and/or carry out businesses.

Additionally, the present invention can reduce the amount of time required to prepare a pizza. When an order for a pizza is received the pizza can be assembled more quickly by using a pizza toppings disk that has been prepared in advance, than by using the present traditional methods of making a pizza.

The present invention, together with its attendant objects and advantages, will be best understood with reference to the detailed description below read in conjunction with the accompanying drawings.

### BRIEF DESCRIPTION OF THE DRAWINGS

FIGURE 1 is a perspective view of a pizza toppings disk made in accordance with the present invention.

FIGURE 2 is a perspective view illustrating a preferred method of making a pizza toppings disk of the present invention.

FIGURE 3 is a perspective view illustrating a preferred use for a pizza toppings disk of the present invention.

FIGURE 4 is a perspective view of a cooked pizza made in accordance with the present invention.

FIGURE 5 is a perspective view of a preferred apparatus for making a pizza toppings disk.

FIGURE 6 is a top view of a preferred apparatus for making a pizza toppings disk.

FIGURE 7 is a perspective view of a depositing means of a preferred apparatus for making a pizza toppings disk.

FIGURE 8 is a cross-sectional view of the upper portion of the depositing means taken along Line 8 - 8 of FIGURE 7.

### DETAILED DESCRIPTION OF THE PREFERRED EMBODIMENTS

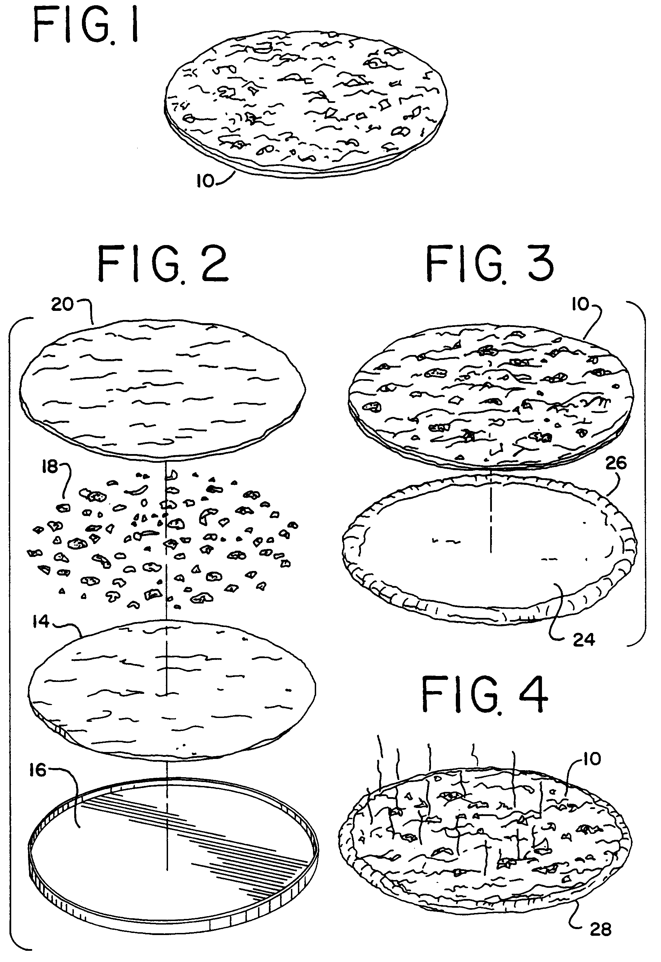

In accordance with a preferred embodiment of the present invention, the pizza toppings disk 10 of Fig. 1 is made by combining one or more quantities of cheese with a plurality of pizza toppings that may include one or more of the following selected items: sliced meats, ground meats, or vegetables, as well as combinations thereof.

In general, any type of cheese appropriate for a pizza is used to make a pizza toppings disk of the present invention. Preferably cheeses which melt evenly and do not separate upon heating are used to form a toppings disk. More preferably low moisture part-skim mozzarella cheese is used.

The cheeses used to make a pizza toppings disk of the present invention are preferably in the form of shredded or sliced cheeses. Shredded cheeses used may be of a powder consistency. Spices may be added to the cheeses used to form a pizza toppings disk. Such spices may include but are not limited to the following: oregano, italian seasoning, garlic, basil, salt or pepper, as well as combinations thereof.

The amounts of the total specified quantity of cheeses to be used and the amounts of the selected pizza toppings to be applied vary according to the size and type of pizza toppings disk desired. Typically, the total quantity of cheese used amounts to between approximately 30% and 90% of the total weight of a pizza toppings disk.

In a preferred method of making a pizza toppings disk, the cheese is combined with selected amounts of typically requested pizza toppings and is distributed as a layer on a forming surface. This layer is appropriately shaped to be placed on top of a pizza shell. The layer may be shaped by dispensing the quantity of cheese combined with the selected pizza toppings over a forming surface having the desired diameter of a finished toppings disk. Generally, the forming surface can be any flat surface, such as the surface of a flat conveyor belt or make table. Typically, the forming surface used may be one of the following surfaces: pans, paper, ring, mold, or similar items. Preferably the forming surface is made of parchment paper.

The pizza toppings of the present invention may include but are not limited to selections from the following group of items: sliced meats, ground meats, or vegetables, as well as combinations thereof. Optionally the selected toppings may be pre-cooked prior to forming a toppings disk. Preferably, the amounts of a selected pizza topping are premeasured for the desired disk size and evenly distributed over the surface area of the pizza toppings disk. Amounts of the pizza toppings combined with the total specified quantity of cheese may vary according to the size and type of pizza toppings disk desired. Optionally, the pizza toppings disk may be customized to certain topping types by combining an individual pizza topping or a combination of pizza toppings with the total specified quantity of cheese. Additionally, a combination of one or more toppings disks may be utilized for assembling a single pizza.

One aspect of the present invention includes several embodiments for providing a pizza toppings disk. Generally, these embodiments include distributing one or more quantities of cheese over a forming surface and forming these quantities of cheese into one or mores layers of cheese. The selected pizza toppings are also distributed as a layer. The components are then fused together to form a pizza toppings disk that is stored for subsequent use in assembling a pizza. Another aspect of the present invention includes several embodiments for automating the process of making a pizza toppings disk. Preferably, the apparatus includes use of a conveyor means, at least one dispensing means, and a fusing means, wherein the components of the pizza toppings disk are dispensed from at least one dispensing means onto a forming surface as the forming surface travels along a conveyor means to a fusing means, where the components are then fused together to form a pizza toppings disk that is stored for subsequent use in assembling a pizza.

In a preferred embodiment of the present invention a quantity of cheese is distributed over the forming surface to form a layer of cheese. Applied on top of this layer of cheese are selected amounts of typically requested pizza toppings.

In another preferred embodiment of the present invention, a first quantity of cheese is formed into a first layer of cheese on a forming surface. In accordance with this preferred embodiment between approximately 20% and approximately 80% of the total specified quantity of cheese of the toppings disk is distributed on the forming surface to form the first layer of cheese. Applied on top of this layer of cheese are the selected amounts of typically requested pizza toppings. A second quantity of cheese is evenly dispensed over the first layer of cheese and the selected pizza toppings to form a second layer of cheese. Typically this second layer of cheese consists of between approximately 20% and approximately 80% of the total specified quantity of cheese for the toppings disk.

In another preferred embodiment of the present invention, as shown in Figure 2, a first quantity of cheese is formed into a first layer of cheese 14 on a forming surface 16. Typically between approximately 35% and approximately 45% of the total specified quantity of cheese in this most preferred embodiment is distributed on the forming surface 16 to form the first layer of cheese 14. Prior to the application of selected amounts of typically requested pizza toppings a portion of the total specified quantity of cheese is combined with these selected pizza toppings. This combination of cheese and selected pizza toppings is depicted in Fig. 2 as reference numeral 18. The combination 18 of cheese and selected pizza toppings is deposited onto the first layer of cheese 14. In this most preferred embodiment, between approximately 10% and approximately 20% of the total specified quantity of cheese is included in the combination 18 of cheese and pizza toppings. In accordance with this most preferred embodiment, a second quantity of cheese is evenly dispensed over the first layer 14 of cheese and the combination 18 of cheese and selected toppings. The second quantity of cheese is dispensed to form a second layer of cheese 20. In this most preferred embodiment, the second layer of cheese 20 consists of between approximately 35% and approximately 45% of the total specified quantity of cheese for a pizza toppings disk.

In accordance with the present invention, the total specified quantity of cheese and the selected pizza toppings are fused together to form a pizza toppings disk that may be stored for subsequent use. The total quantity of cheese and selected pizza toppings may be fused together by one of the following methods: chemical, mechanical, or thermal methods. Examples of such methods include but are not limited to partially melting the cheese; applying a vacuum; applying a pressure such as a roller press; applying a food safe adhesive such as gums, pectines, gelatins, or an edible film; or applying a food safe shrink wrap or a spray wrap.

Preferably the total quantity of cheese and the selected pizza toppings are fused together by heating. In accordance with such a method, the components are subjected to a partial, minimal melt. The temperature necessary to accomplish this minimal melt may vary depending on the type of cheese used and the type of heating element employed. When the preferred cheese, low moisture part-skim mozzarella is used, the temperature at which a partial, minimal melt is achieved is approximately 218°C (425°F). The amount of time required to achieve a partial minimal melt varies according to the following factors: the selected heating temperature, the individual pizza toppings chosen, and the final size desired for the toppings disk.

Under the preferred fusing method, a pizza toppings disk of the present invention may be increased in size by applying unmelted cheese, in a concentric circle, to the existing fused toppings disk and repeating partial, minimal melts as necessary.

After fusing, a pizza toppings disk of the present invention may be stored for subsequent use in assembling a pizza. Preferably, the pizza toppings disk is stored under refrigeration without being frozen prior to being used in assembling a pizza. Optionally, the pizza toppings disk may be frozen for a more prolonged storage prior to being used in assembling a pizza.

Referring now to Figure 3, a pizza toppings disk 10 is most preferably used in assembling a pizza. Optionally, a pizza toppings disk of the present invention may be placed onto the uncooked shell of any size or type of pizza. Examples of such shells may include but are not limited to pizza shells for a hand-tossed traditional crust, a pan-style pizza, a thin-crust style pizza, or a double-crust style pizza. These styles of pizzas are well known in the art. In accordance with the present invention an uncooked shell is intended to include "par baked" shells which are shells that are partially baked, completely unbaked shells, or any shell that is frozen. Optionally, a fully baked shell or fully baked shell frozen in advance, may be used in assembling a pizza.

As illustrated in Figure 3, The toppings disk 10 is removed from storage and is placed on top of an uncooked pizza shell 26. The pizza toppings disk and uncooked pizza shell are then baked to produce a cooked pizza 28, as illustrated in Figure 4. Baking may include the use of a microwave to produce the cooked pizza 28. Preferably tomato sauce or traditional pizza sauce is applied between the toppings disk and the pizza shell.

The process of making the present invention may be automated. Automating the process reduces labor and overhead expenses and results in better cost control. In accordance with the present invention, an apparatus for making a pizza toppings disk includes generally a conveyor means, at least one forming surface, at least one depositing means, a fusing means, and a freezing means, wherein the components of the pizza toppings disk are deposited from at least one depositing means onto a forming surface as the forming surface travels along a conveyor or automated traveling means to a fusing means, where the components are then fused together to form a pizza toppings disk that is stored for subsequent use in assembling a pizza.

Typically, a pizza toppings disk 10 of FIGURE 3 is used in assembling a pizza. Optionally, a pizza toppings disk of the present invention may be placed onto the uncooked shell of any size or type of pizza including but not limited to the type of shells described previously herwithin.

As illustrated in FIGURE 3, a toppings disk 10, made in accordance with present invention, is removed from storage and is placed on top of an uncooked pizza shell 26. The pizza toppings disk and uncooked pizza shell are then baked to produce a cooked pizza 28, as illustrated in FIGURE 4. Baking may include the use of a microwave to produce the cooked pizza 28. Preferably tomato sauce or traditional pizza sauce is applied between the toppings disk and the pizza shell.

In a preferred embodiment of the present invention, the apparatus for automating the process of making a pizza toppings disk includes a conveyor means which transport forming surfaces, a depositing means from which cheese and selected pizza toppings are deposited automatically onto the forming surfaces as they travel on the conveyor means, a fusing means which fuses the components to form a toppings disk, an a freezing means for freezing the toppings disk for storage and subsequent use in assembling a pizza.

In a preferred embodiment, the apparatus for making a pizza toppings disk includes a conveyor which continuously transports a forming surface. At predetermined intervals a depositing means deposits a quantity of cheese onto the forming surface to form a first layer of cheese. The forming surface continues along the conveyor or other automated traveling surface to a second depositing means where selected amounts of typically requested pizza toppings are deposited onto the layer of cheese and the forming surface. The forming surface with the first layer of cheese and the layer of selected pizza toppings continues along the conveyor to a fusing means where the quantity of cheese and selected pizza toppings are fused together to form a pizza toppings disk. A freezing means freezes the fused pizza toppings disk which then may be stored for subsequent use in assembling a pizza.

In another preferred embodiment, a forming surface is placed on a conveyor means or other automated traveling means. Preferably, the forming surface has the profile shape and diameter of the desired finished toppings disk. Generally, the forming surface placed on the conveyor can be any flat surface, such as the following surfaces: pans, paper, ring, mold, plastics, metallic materials or similar items. Optionally, the conveyor belt may be used as the forming surface. Preferably, the forming surface is made of parchment paper having a high tensile strength and a flash point that is greater than 260°C (500°F). More preferably, the forming surface is coated with a mixture of vegetable oil and silicon. The mixture aids in better separation of the forming surfaces from various finished pizza toppings disk combinations. Optionally, other materials having a slick surface may be used as forming surfaces. The forming surfaces may be delivered to the conveyor means or other automated means by a standard paper carrier such as the type manufactured by The James River Co. of Virginia. The forming surfaces are arranged on the conveyor means in a single file with a predetermined spacing between surfaces.

In a preferred embodiment, the forming surfaces are transported by a conveyor or other automated traveling means under a depositing mess where a quantity of cheese or a selected quantity of a typically requested pizza topping is deposited onto the forming surface in a shape substantially similar to that of the forming surface. Preferably, the component is deposited onto the forming surface in a manner wherein the component fills onto the forming surface and forms a specific shape on the forming surface. More preferably, a quantity of cheese is used as the first component to be deposited onto the forming surface and forms a first layer of cheese on the forming surface when deposited.

In general, any type of cheese appropriate for a pizza is used to make a pizza toppings disk of the present invention. Preferably cheeses which melt evenly and do not separate upon heating are used to form a toppings disk. More preferably low moisture part-skim mozzarella cheese is used.

The cheeses used to make a pizza toppings disk of the present invention are preferably in the form of shredded or sliced cheeses. Shredded cheeses used may be of a powder consistency. Spices may be added to the cheeses used to form a pizza toppings disk. Such spices may include but are not limited to the following: oregano, italian seasoning, garlic, basil, salt or pepper, as well as combinations thereof.

The amounts of the total specified quantity of cheeses to be used and the amounts of the selected pizza toppings to be applied vary according to the size and type of pizza toppings disk desired. Typically, the total quantity of cheese used amounts to between approximately 30% and 90% of the total weight of a pizza toppings disk. Optionally, the total quantity of cheese used may amount to approximately 100% of the total weight of a pizza toppings disk if a "cheese only" toppings disk is desired.

In accordance with the present invention, upon depositing the first component onto the forming surface, the forming surface is transported through a plurality of depositing means wherein a quantity of cheese or other edible binding agent and typically requested pizza toppings are deposited onto the first component. The pizza toppings which are deposited may include, but are not limited to, the following items: sliced meats, ground meats, or vegetables as well as combinations thereof.

The pizza toppings of the present invention may include but are not limited to selections from the following group of items: sliced meats, ground meats, or vegetables, as well as combinations thereof. Optionally the selected toppings may be pre-cooked prior to forming a toppings disk. Preferably, the amounts of a selected pizza topping are premeasured for the desired disk size and evenly distributed over the surface area of the pizza toppings disk. Amounts of the pizza toppings combined with the total specified quantity of cheese may vary according to the size and type of pizza toppings disk desired. Optionally, the pizza toppings disk may be customized to certain topping types by combining an individual pizza topping or a combination of pizza toppings with the total specified quantity of cheese. Additionally, a combination of one or more toppings disks may be utilized for assembling a single pizza.

Preferably a quantity of cheese or other edible binding agent is deposited as the first component on the forming surface to form a first layer of cheese. Preferably, deposited on top of this first quantity of cheese are one or more typically requested pizza toppings, depending on the finished toppings disk desired. Upon depositing the selected pizza toppings, an additional amount of cheese or other binding agent is deposited onto the toppings.

In a more preferred embodiment of the present invention, a first quantity of cheese is deposited as a first layer of cheese on a forming surface. In accordance with this preferred embodiment between approximately 20% and approximately 80% of the total specified quantity of cheese of the toppings disk is deposited on the forming surface to form the first layer of cheese. Deposited on top of this layer of cheese are selected amounts of typically requested pizza toppings. A second quantity of cheese is evenly deposited over the first layer of cheese and the selected pizza toppings to form a second layer of cheese. Typically this second layer of cheese consists of between approximately 20% and approximately 80% of the total specified quantity of cheese for the toppings disk.

In another more preferred embodiment of the present invention, a first quantity of cheese is deposited as a first layer of cheese on a forming surface. Typically between approximately 35% and approximately 45% of the total specified quantity of cheese in this more preferred embodiment is deposited on the forming surface to form the first layer of cheese. Prior to the application of selected amounts of typically requested pizza toppings a portion of the total specified quantity of cheese is combined with these selected pizza toppings. The combination of cheese and selected pizza toppings is deposited onto the first layer of cheese. In this more preferred embodiment, between approximately 10% and approximately 20% of the total specified quantity of cheese is included in the combination of cheese and pizza toppings. In accordance with this more preferred embodiment, a second quantity of cheese is evenly dispensed over the first layer of cheese and the combination of cheese and selected toppings. The second quantity of cheese is dispensed to form a second layer of cheese. In this more preferred embodiment, the second layer of cheese consists of between approximately 35% and approximately 45% of the total specified quantity of cheese for a pizza toppings disk.

A preferred means for depositing the components of a toppings disk is a waterfall depositing means. A waterfall depositing means, made in accordance with the present invention incorporates a unique template conveyor means. The template conveyor means enables the components of the toppings disk to be deposited onto the forming surface in a specific shape while recycling excess amounts. The template conveyor means removes excess collected amounts of the binding agent to a reclaim feed system that resupplies the waterfall depositing means.

Preferably, the template conveyor means is configured and shaped to deposit the desired amount of a component onto the forming surface in a predetermined profile. Preferably, the template conveyor means is configured and shaped such that the component being deposited falls onto the forming surface and forms a specific shape on the forming surface which thereby avoids having to recycle excess amounts. Preferably, the template conveyor is configured such that a loop having a series of templates is formed which encompasses the automated traveling means upon which the forming surfaces are transported. Additionally, the template conveyor includes a drive means which synchronizes each individual template with a forming surface such that the template travels a predetermined distance above and is in synchronized correspondence with a forming surface.

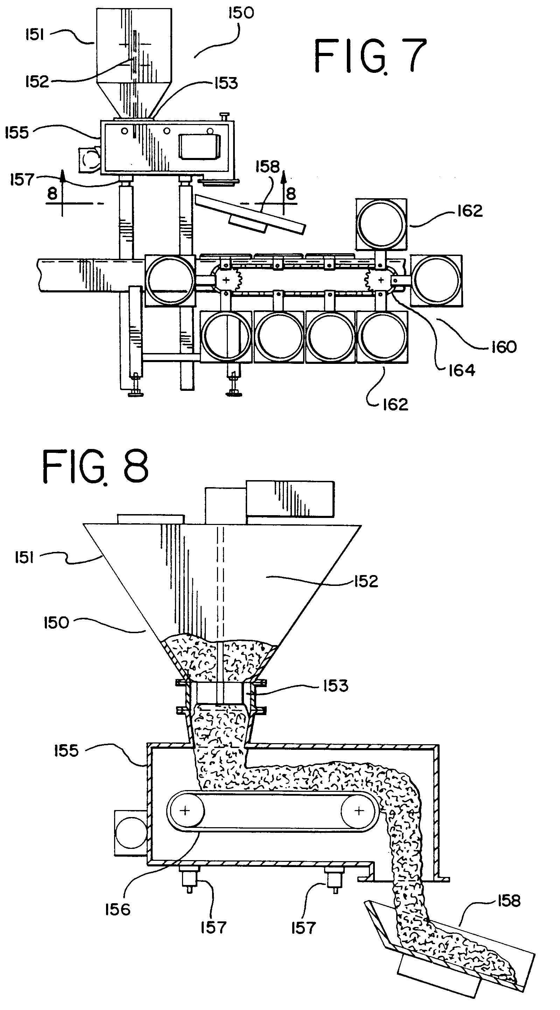

Another preferred means for depositing the components of a toppings disk is a weighbelt depositing means. This preferred depositing means is also designed and configured to incorporate a template conveyor means which is substantially similar to the template conveyor means described above. The weighbelt depositing means and template conveyor means will be described in greater detail in connection with FIGURES 7 and 8.

Once all the components are deposited on the forming surface, they are transported along the conveyor or automated traveling means to a fusing means. The fusing means fuses the components together to thereby form a pizza toppings disk. The total quantity of cheese and selected pizza toppings may be fused together by one of the following methods: chemical, mechanical, or thermal methods. Examples of such methods include but are not limited to partially melting the cheese; applying a vacuum; applying a pressure such as a roller press; applying a food safe adhesive such as gums, pectines, gelatins, or an edible film; or applying a food safe shrink wrap or a spray wrap.

Preferably the total quantity of cheese and the selected pizza toppings are fused together by heating and an impingement of steam air. In accordance with such a method, the components are subjected to a partial, minimal melt. The temperature and amount of humidity necessary to accomplish this minimal melt may vary depending on the type of cheese used and the type of heating element employed. The amount of time required to achieve a partial minimal melt varies according to the following factors: the selected heating temperature, the percentage of humidity, the individual pizza toppings chosen, and the final size desired for the toppings disk.

Once fused together, the pizza toppings disk is transported to a freezing means where the temperature of the disk is cooled until frozen. Preferably the disk is frozen for use at a subsequent date in assembling a pizza. Optionally, the pizza toppings disk is stored under refrigeration without being frozen prior to being used in assembling a pizza.

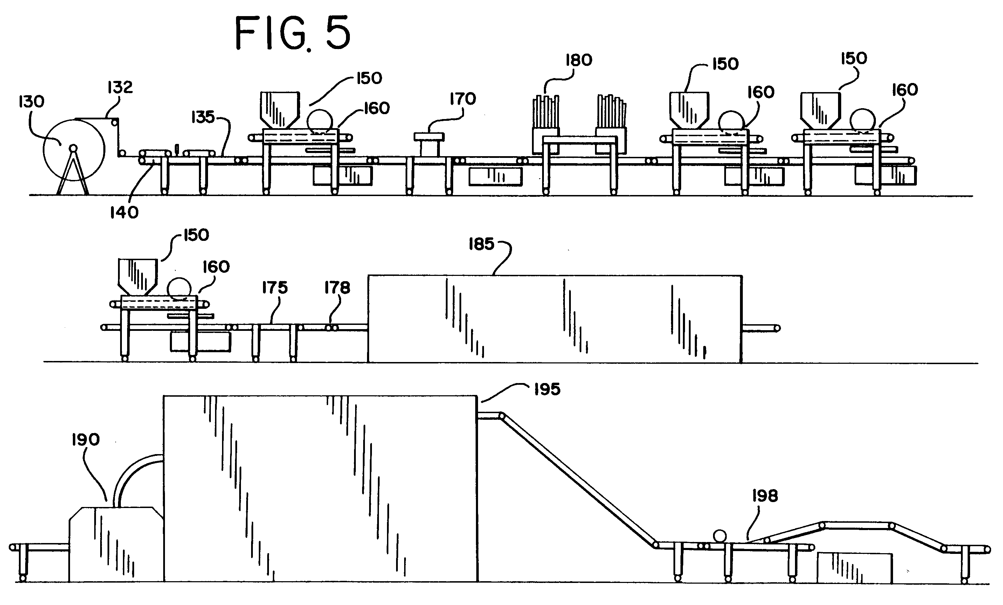

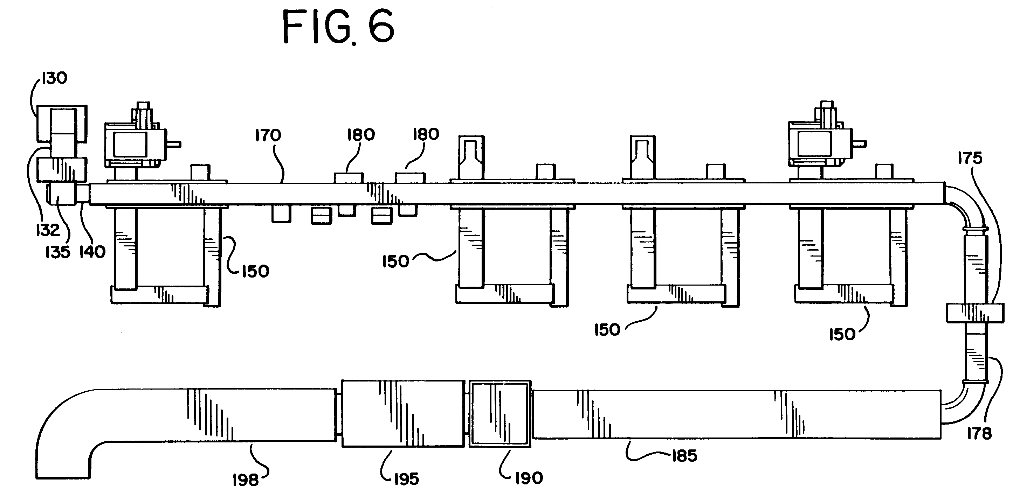

Referring now to FIGURES 5 and 6, a more preferred embodiment 100 of the apparatus for making a pizza toppings disk is illustrated. In this preferred embodiment 100, the forming surfaces 135 are fed from a continuous unwind source 130 onto an automated conveyor belt 140. Preferably, the forming surfaces are constructed from paper 132 having a high tensile strength and a flash point greater than approximately 149°C (300°F). More preferably, the forming surfaces 135 have a flash point greater than approximately 260°C (500°F). The paper 132 is guided in roll form from the unwind source 130 to the conveyor belt 140, which is traveling between approximately 45 feet per minute to 110 feet per minute. As the paper 132 is guided to the conveyor belt 140 it is sheared into individual segments or forming surfaces 135. Preferably, the forming surfaces 135 are coated with a mixture of vegetable oil and silicon. The coating aids in separating the various finished toppings disks from the forming surface. Preferably, the forming surfaces 135 are arranged in single file at predetermined space intervals on the conveyor belt 140. Optionally, plastic, metallic, and other materials may be used as forming surfaces in place of paper. In addition, the conveyor belt 140 may be configured to incorporate internal forming surfaces within the traveling means.

The forming surface 135 is transported along the conveyor means 140 to a depositing means 150. The depositing means 150 deposits a layer of a selected component onto the forming surface 135 to form a base layer upon which additional components of the pizza toppings disk are deposited. Preferably, the depositing means 150 is configured to deposit the correct specification of shape, volume, and density of the pizza toppings disk component within a predetermined profile space in a continuous manner. Preferably, the depositing means is used in conjunction with a template conveyor means 160 which is synchronized to deposit the components of a pizza toppings disk onto the forming surfaces 135 in a predetermined profile shape. The depositing means 150 and template conveyor means 160 will be described in greater detail with respect to FIGURES 7 and 8.

In a preferred embodiment of the present invention, the base layer upon which the additional pizza toppings components are deposited is formed of cheese or another similar edible binding agent. Preferably, the cheese is deposited in a continuous flow onto the forming surface 135 to form a base layer. More preferably, preshredded frozen mozzarella or other typical pizza cheese is deposited.

Upon depositing a base layer of a selected component, the forming surface 135 is then transported along the conveyor 140 to a check weighing means 170. Preferably, the check weighing means 170 checks the amount of the first component deposited by the depositing means 150. The check weighing means 170 aids in regulating the performance of the depositing means 150. Additionally, the check weighing means 170 is capable of discharging and reclaiming amounts of the deposited component which are not within the specification desired for the finished pizza toppings disk. Preferably, the forming surfaces are presented to the check weighing means 170 in a single file manner. Preferably, the check weighing means 170 is a standard in line high speed check weighing system of the type manufactured by Hi-Check Weigher Company of Ithaca, New York.

From the check weighing means 170, the forming surface 135 and the first deposited component are transported to a depositing means designed to deposit sliced meats in a specific predetermined pattern. The sliced meats depositing means 180 deposits components of the pizza toppings disk such as pepperoni in a predetermined pattern that corresponds to the size and shape of the first component deposited on the forming surface 135. Preferably, forming surfaces are presented to the sliced meats depositing means 180 in a single file manner. Preferably, a standard pizza manufacturer slicer such as the Pepp-o-matic, manufactured by Grote, Inc. of Ohio is used to deposit the sliced meats.

Upon depositing the sliced meats on the forming surface 135 and the first deposited component, the forming surface is transported through a plurality of depositing means which are substantially similar to the depositing means 150 described previously. As the forming surface is guided through these depositing means, additional pizza toppings components are deposited. Preferably, typically requested pizza topping items such as vegetables and ground meats are deposited individually or in a combined mixture on top of the sliced meats.

As illustrated in FIGURES 5 and 6, the forming surface 135 is transported through a plurality of depositing means 150 after traveling through the sliced meats depositing means. In the preferred embodiment illustrated in FIGURES 5 and 6 separate depositing means 150 are arranged to deposit the remaining components of the pizza toppings disk onto the forming surface 135. Preferably the forming surface 135 is passed through a depositing means 150 for depositing vegetables and a depositing means 150 for depositing ground meats. Optionally, a single depositing means 150 may be used to deposit a preblended combination of ground meats and vegetables. Preferably, an additional depositing means 150 is used to deposit an additional layer of cheese or other binding agent. More preferably, the additional layer of cheese is deposited as the final pizza toppings disk component on the forming surface 135.

Optionally, upon deposit of the various components of the pizza toppings disk, the forming surface 135 containing these components is guided through an inline metal detector 175. The metal detector 175 indicates if an individual forming surface contains an excessive amount of metal. If this occurs the contaminated forming surface is disposed of before continuing along the conveyor belt means 140. Preferably, an inline standard metal detector of the type known in the art is used which is able to detect particle size greater than accepted safety standards for the various types of pizza toppings disks.

Preferably, as the forming surfaces 135 pass the metal detector 175 they are diverted from a single feed loading along the conveyor 140 to a triple feed loading before entering the fusing means 185. The triple feed loading provides a more efficient presentation of forming the surfaces as they enter the fusing means 185. Preferably a standard lane diverter 178 of the type known in the art is used.

After being rearranged by the lane diverter 178 the forming surfaces 135 containing the assembled components of a pizza toppings disk enter a fusing means 185. The fusing means 185 fuses together the selected pizza toppings and cheeses to form a pizza toppings disk. Preferably, the components are fused together by being subjected to a partial minimal melt combined with an impingement of steam. Preferably, the impingement of steam is enough that a nominal amount of free standing water remains on the surface of the toppings disk as the disk exits the fusing means. The free standing water prevents dehydration of the components of the toppings disk during chilling and freezing. More preferably the forming surfaces 135 and the assembled components are exposed to a temperature between approximately 38°C (100°F) and 232°C (450°F) with an impingement of steam having approximately 2% to 50% humidity for approximately 15 seconds to approximately 60 seconds. Most preferably, the forming surfaces 135 and assembled components are exposed to a temperature between approximately 93°C (200°F) and approximately 177°C (350°F) with an impingement of steam having approximately 4% to approximately 10% for approximately 25 seconds to approximately 40 seconds. In the preferred embodiment illustrated in FIGURES 5 and 6 the fusing means 185 is modular in design and has independent temperature, humidity, and air velocity controls. The modules of the fusing means are designed to meet the United States Department of Agriculture requirements. Preferably, the fusing means 185 may be one of several models of high velocity convection ovens such as those manufactured by Stein Inc., of Sandusky, Ohio.

Optionally, upon exiting the fusing means 185, the forming surfaces 135 and the fused toppings disks 110 are transported through a chilling means 190. The chilling means 190 chills the temperature of the fused toppings disks 110 and sets the surface of the fused toppings disks prior to freezing. Preferably, a chilling means is used prior to freezing the fused toppings disks to prevent moisture transfer during the freezing process. In addition, chilling the fused toppings disks 110 prior to freezing aids in preventing surface deformation. Preferably, the fused toppings disks are subjected to an impingement of air containing carbon dioxide. More preferably, the fused toppings disks are exposed to an impingement of carbon dioxide for approximately 5 seconds to approximately 25 seconds as the fused toppings disks 110 are being transported. The amount of exposure time is dependant on the type of fused toppings disk and the rate of flow of the carbon dioxide. Preferably, an air-blast freezer or cryogenic freezer may be used as the chilling means 190. Optionally, alternative chilling means or prefreezing cool down options may be employed. A chilling means chamber may be used where the forming surfaces 135 and assembled components travel the length of a housing chamber in which ambient air is passed.

Upon exiting the chilling means 190, or if no chilling means has been employed, upon being rearranged by the lane diverter 178, the fused toppings disks 110 are frozen. Prior to packaging, the fused toppings disks 110 pass through a freezing means 195. The fused toppings disks are frozen to allow for prolonged storage periods and to prevent bacterial growth. Preferably, a fast freezer or a freezing means which freezes rapidly is used to avoid dehydration of the fused components. More preferably a standard spiral freezer is used. Preferably, the fused pizza toppings disks 110, are subjected to temperatures of approximately, -40°C (-40°F) to approximately -23°C (-10°F) for approximately five minutes to approximately ten minutes. Preferably, a spiral freezer of the type manufactured by the Frigoscandia Company, of Sweden is used. Other freezing means 195 may be used which will vary the parameters of the time and temperature necessary to freeze a fused toppings disk made in accordance with the present invention.

Optionally, upon exiting the chilling means, or if no chilling means has been employed, upon being rearranged by the lane diverter, the fused toppings disks may be refrigerated. Preferably, prior to being refrigerated the fused toppings disks are packaged in a modified atmosphere package to prevent bacterial growth.

After the fused toppings disks are frozen, the forming surfaces 135 are separated from the toppings disk 110. Various separation methods may be used which do not affect the integrity of the toppings disk 110. Preferably, a vacuum belt means 198 is used which pulls the forming surface taught against the belt's surface causing the frozen toppings disk 110 to be peeled away automatically. Preferably, a standard vacuum belt such of the type known in the art is used. Once the forming surfaces are separated from the toppings disks, the toppings disks may be stored for subsequent use in assembling a pizza.

Referring now to FIGURES 7 and 8 a weighbelt depositing means 150 and a template conveyor means 160 are shown. The weighbelt depositing means 150, as described previously, may be used for depositing various components of a pizza toppings disk onto the forming surfaces. A template conveyor means 160 is used to disperse the components into a predetermined shape as they are being deposited. Typically, when a weighbelt feed device is used as the depositing means 150, the component being deposited is feed into a hopper 151. Contained within the hopper is an agitator bar 152 which aids in depositing the component evenly. Additionally, the hopper 151 contains and orifice or window 153 which can be adjusted to change the flow rate of the component being deposited. The component is then feed into a weighbelt chamber 155. The weighbelt chamber is supported by a series of load cells 157. Preferably, the weighbelt depositing means is configured such that the load cells 157 communicate with the orifice 153 to ensure the proper amount of component is deposited. Within the weighbelt chamber is a weighbelt 156 which weighs the amount of component to be deposited. After the component is weighed it is passed through an opening and onto a vibratory plate 158. The vibratory plate 158 permits the component being deposited to be continuously deposited onto the forming surfaces without having to stop the conveyor belt 140 on an intermittent basis. Preferably, the weighbelt depositing means 150 is made of stainless steel construction and is approved by the United States Department of Agriculture.

As the component is dispensed from the vibratory plate 158 onto the forming surfaces 135, it is passed through a template conveyor means 160. The template conveyor means 160 disperses the component onto the forming surfaces 135 in a predetermined shape. The template conveyor means 160 is shaped and configured such that the entire amount of component being deposited is dispersed onto the forming surface in a specific shape without having to recycle excess amounts. The template conveyor means removes excess collected amounts of the component being deposited to a reclaim feed system that resupplies the waterfall or weighbelt depositing means 150. Preferably, the template conveyor means 160 is independent of the conveyor belt 140 and the depositing means 150 but is positioned to encompass the conveyor belt 140 in proximity of the depositing means. Preferably, the template conveyor is configured such that a loop having a series of templates 162 is formed which encompasses the automated traveling means or conveyor belt 140 upon which the forming surfaces 135 are transported.

Preferably, the loop having a series of templates is affixed such that the templates orientation is guided by a stationary cam track. Preferably, each template is affixed to the loop individually and have a hinged support bracket. The hinged support bracket permits the template to be adjusted to travel in parallel with the forming surfaces. Additionally, the template conveyor 160 includes a drive means 164 which allows each individual template 162 to travel over a forming surface 135 such that the template travels a predetermined distance above the forming surface 135. Optionally, the templates may be synchronized to be aligned with a forming surface 135 such that the template travels a predetermined distance above and is in synchronized correspondence with a forming surface 135.

Optionally, the template conveyor means 160 may be configured to have a single template which encompasses the automated traveling means or conveyor belt 140.

Optionally, under the present invention, pizza toppings disks may be prepared at a central location and then shipped to individual pizza restaurants, deliveries, and/or carryout businesses. Making the toppings disks of the present invention at a centralized location can reduce overhead expenses.

### EXAMPLES

The following examples and tables, set forth below for purposes of illustration and description, further describe and illustrate a variety of pizza toppings disks made in accordance with the present invention. These examples and tables are not intended to be exhaustive or to limit the invention to the precise forms disclosed.

TABLE I illustrates by way of example the amounts of cheese and selected pizza toppings necessary for a variety of pizza toppings disks.

**TABLE 1**

| PIZZA TOPPINGS DISK TYPE | TOTAL QUANTITY OF CHEESES (ounces) | SELECTED TOPPINGS AND QUANTITIES (ounces) |
|---|---|---|
| SUPREME | 7-8 oz. low moisture part-skim mozzarella | Sliced meats 1-2 oz. |
| | | Ground meats 2-4 oz. |
| | | Vegetables 1-3 oz. |
| PEPPERONI | 3.5-4.5 oz. low moisture part-skim mozzarella | Sliced meats 2-3 oz. |
| VEGETABLE | 3.5-4.5 oz. low moisture part-skim mozzarella | Vegetables 4-9 oz. |

TABLE IA illustrates by way of example the amounts of cheese and selected pizza toppings necessary for a variety of pizza toppings disks made in accordance with the preferred apparatus disclosed herewithin.

**TABLE IA**

| AUTOMATED PIZZA TOPPINGS DISK | | |
|---|---|---|
| AUTOMATED 6" PIZZA TOPPINGS DISK TYPE | TOTAL QUANTITY OF CHEESES (ounces) | SELECTED TOPPINGS AND QUANTITIES (ounces) |
| SUPREME | 2-2.5 oz. low moisture part-skim mozzarella | Sliced meats .25-1 oz. |
| | | Ground meats .75-1 oz. |
| | | Vegetables 1-2 oz. |
| PEPPERONI | 2-2.5 oz. low moisture part-skim mozzarella | Sliced meats .50-1 oz. |
| CHEESE-LOW COUNT PEPPERONI | 1-2 oz. low moisture part-skim mozzarella | Sliced meats .25-1 oz. |
| CHEESE | 3-3.5 oz. low moisture part-skim mozzarella | None |
| MEAT LOVERS® | 2-2.5 oz. low moisture part-skim mozzarella | Pepperoni .25-1 oz. |
| | | Ground meats 2.5-5 oz. |

| AUTOMATED 12" PIZZA TOPPINGS DISK TYPE | TOTAL QUANTITY OF CHEESES (ounces) | SELECTED TOPPINGS AND QUANTITIES (ounces) |
|---|---|---|
| SUPREME | 3.5-4 oz. low moisture part-skim mozzarella | Sliced meats 1-2 oz. |
| | | Ground Meat 6-7 oz. |
| | | Vegetables 3-4 oz. |
| PEPPERONI | 7-8 oz. low moisture part-skim mozzarella | Sliced meats 2-3 oz. |
| CHEESE-LOW COUNT PEPPERONI | 3.5-4 oz. low moisture part-skim mozzarella | Sliced meats 1-2 oz. |
| CHEESE | 10.5-11 oz. low moisture part-skim mozzarella | None |
| MEAT LOVERS® | 7-8 oz. low moisture part-skim mozzarella | Pepperoni 1-2 oz. |
| | | Ground meats 7-11 oz. |

| AUTOMATED 15" PIZZA TOPPINGS DISK TYPE | TOTAL QUANTITY OF CHEESES (ounces) | SELECTED TOPPINGS AND QUANTITIES (ounces) |
|---|---|---|
| SUPREME | 10-11 oz. low moisture part-skim mozzarella | Sliced meats 1.5-2 oz. |
| | | Ground Meat 9-10 oz. |
| | | Vegetables 4.5-5 oz. |
| PEPPERONI | 10.5-11 oz. low moisture part-skim mozzarella | Sliced meats 3-4 oz. |
| CHEESE-LOW COUNT PEPPERONI | 5.25-6 oz. low moisture part-skim mozzarella | Sliced meats 1.5-2.5 oz. |
| CHEESE | 15.75-16 oz. low moisture part-skim mozzarella | None |
| MEAT LOVERS® | 10-11 oz. low moisture part-skim mozzarella | Pepperoni 1.5-2 oz. |
| | | Ground meats 10-13 oz. |

A SUPREME pizza is a pizza consisting of a plurality of pizza toppings. The typical pizza toppings placed on a SUPREME pizza include sliced meats such as pepperoni, ground meats such as sausage, and a variety of vegetables. In assembling a pizza toppings disk for a SUPREME pizza in accordance with the most preferred embodiment of the present invention, between 35% and 45% of the total quantity of cheese specified is evenly distributed on a forming surface having the desired diameter of the finished disk. This first quantity of cheese is formed into a first layer of cheese. Sliced meats are placed over this layer. Between 10% and 20% of the total quantity of cheese used is mixed with vegetables and ground meats and deposited onto the first layer of cheese. A second quantity of cheese consisting of between 35% and 45% of the total quantity of cheese used in a SUPREME pizza is then deposited onto the previous layer of cheese and layer of selected pizza toppings to form a second layer of cheese. The components are then fused to form a pizza toppings disk.

The other examples of various pizzas set forth in TABLE I and TABLE IA are made in the same manner as described above. However the total quantities of cheese used and the pizza toppings selected and quantities thereof vary according to the amounts disclosed in TABLE I and TABLE IA.

TABLE II sets forth the corresponding preferred partial, minimal melt conditions of the preferred methods of fusing for the various toppings disks disclosed in TABLE I.

**TABLE II**

| PIZZA TOPPINGS DISK TYPE | TEMPERATURE FOR PARTIAL MELT (F) | TIME FOR PARTIAL MELT (minutes) |
|---|---|---|
| SUPREME | (425° F) 218°C | 3.20 min. |
| PEPPERONI | (425° F) 218°C | 2.50 min. |
| VEGETABLE | (425° F) 218°C | 2.50 min. |

TABLE IIA sets forth the corresponding preferred partial, minimal melt conditions of a preferred fusing means with an impingement of steam for the various toppings disks disclosed in TABLE IA.

**TABLE IIA**

| PIZZA TOPPINGS DISK TYPE | TEMPERATURE FOR PARTIAL MELT (F) | TIME FOR PARTIAL MELT (seconds) |
|---|---|---|
| SUPREME | (280°F) 138°C | 25 sec. |
| PEPPERONI | (280°F) 138°C | 25 sec. |
| CHEESE-LOW COUNT PEPPERONI | (280°F) 138°C | 20 sec. |
| CHEESE | (280°F) 138°C | 20 sec. |
| MEAT LOVERS® | (280°F) 138°C | 25 sec. |

The toppings disks described above were used to assemble uncooked pizzas as follows: the pizza toppings disks were placed on top of uncooked pizza shells, and pizza sauce was applied between the toppings disks and the pizza shells. The pizza toppings disks and uncooked pizza shells were then baked to produce cooked pizzas. The appearance and texture of the cooked pizzas were the same as that of pizzas prepared by traditional methods.

The foregoing descriptions of the preferred embodiments of the present invention have been presented for purposes of illustration and description. They are not intended to be exhaustive or to limit the invention to the precise forms disclosed, and obviously many modifications and variations are possible in light of the above teachings. The embodiments were chosen and described in order to best explain the principles of the invention and various embodiments and with various modifications as are suited to the particular use contemplated. It is intended that the scope of the invention be defined by the following claims, including all equivalents.

## Claims

1. A method of making a pizza by baking a shell having cheese and pizza toppings thereon, characterized by performing the following steps:
combining a quantity of cheese (14) with a plurality of pizza toppings (18) selected from the group consisting of sliced meats, ground meats, and vegetables, as well as combinations thereof into a layer on a surface (16), said layer being appropriately shaped to be placed on a pizza shell (24);
fusing said quantity of cheese and pizza toppings to thereby form a toppings disk (10); storing said toppings disk (10) for subsequent use;
providing a pizza shell (24);
assembling said pizza toppings disk (10) and said
pizza shell (24) to form an uncooked pizza; and baking said uncooked pizza.

2. The method of Claim 1, wherein said quantity of cheese includes shredded cheese.

3. The method of Claim 1, wherein said quantity of cheese includes sliced cheese.

4. The method of Claim 1, wherein said quantity of cheese and said pizza toppings are fused together by softening said quantity of cheeses and resolidifying said quantity of cheeses.

5. The method of Claim 1, wherein said quantity of cheese and said pizza toppings are fused together by a food safe adhesive.

6. The method of Claim 1, wherein the said toppings disk is refrigerated without being frozen during storage.

7. The method of Claim 1, wherein said toppings disk is frozen during storage.

8. The method of Claim 1, wherein pizza sauce is applied between the toppings disk and the shell.

9. The method of Claim 1, wherein a first quantity of cheese (14) is formed into a layer, a plurality of pizza toppings (18) is applied on top of said layer of the first quantity of cheese, and a second quantity of cheese (20) is applied on top of said first layer of cheese and the pizza toppings.

10. The method of Claim 9, further comprising the steps of:
combining a third quantity of cheese with said plurality of pizza toppings prior to applying said plurality of pizza toppings to said first layer of cheese.

11. The method of Claim 9, wherein said quantities of cheese include shredded cheese.

12. The method of Claim 9, wherein said quantities of cheese include sliced cheese.

13. The method of Claim 9, wherein said quantities of cheese and said pizza toppings are fused together by softening said quantities of cheeses and resolidifying said quantities of cheeses.

14. The method of Claim 9, wherein said quantities of cheese and said pizza toppings are fused together by a food safe adhesive.

15. The method of Claim 9, wherein the said toppings disk is refrigerated without being frozen during storage.

16. The method of Claim 9, wherein said toppings disk is frozen during storage.

17. The method of Claim 9, wherein pizza sauce is applied between the toppings disk and the shell.

18. A method of making a pizza toppings disk for subsequent use in assembling a pizza, characterized by performing the following steps:
combining a quantity of cheese (14) with a plurality of pizza toppings (18) selected from the group consisting of slice meats, ground meats, and vegetables, as well as combinations thereof into a layer on a surface (16), said layer being appropriately shaped to be placed on the pizza shell (24);
fusing said quantity of cheese and pizza toppings to thereby form a toppings disk (10); and
storing said toppings disk (10) for subsequent use in assembling a pizza.

19. The method of Claim 18, wherein said quantity of cheese includes shredded cheese.

20. The method of Claim 18, wherein said quantity of cheese includes sliced cheese.

21. The method of Claim 18, wherein said quantity of cheese and said pizza toppings are fused together by softening said quantity of cheeses and resolidifying said quantity of cheeses.

22. The method of Claim 18, wherein said quantity of cheese and said pizza toppings are fused together by a food safe adhesive.

23. The method of Claim 18, wherein the said toppings disk is refrigerated without being frozen during storage.

24. The method of Claim 18, wherein said toppings disk is frozen during storage.

25. The method of Claim 18, wherein a first quantity of cheese (14) is formed into a layer on the surface and the plurality of pizza toppings (18) are applied on top of the layer of the first quantity of cheese.

26. The method of Claim 25, wherein said layer of cheese includes shredded cheese.

27. The method of Claim 25, wherein said layer of cheese includes sliced cheese.

28. The method of Claim 25, wherein said quantity of cheese and said pizza toppings are fused together by softening said quantity of cheese and resolidifying said quantities of cheeses.

29. The method of Claim 25, wherein said quantity of cheese and said pizza toppings are fused together by a food safe adhesive.

30. The method of Claim 25, wherein said toppings disk is refrigerated without being frozen during storage.

31. The method of Claim 25, wherein said toppings disk is frozen during storage.

32. The method of Claim 25, wherein a second quantity of cheese (20) is applied on top of the first layer of cheese and pizza toppings.

33. The method of Claim 32, wherein said quantities of cheeses includes shredded cheese.

34. The method of Claim 32 wherein said quantities of cheese include sliced cheese.

35. The method of Claim 32 wherein said quantities of cheese and said pizza toppings are fused together by softening said quantities of cheeses and resolidifying said quantities of cheeses.

36. The method Of Claim 32 wherein said quantities of cheese and said pizza toppings are fused together by a food safe adhesive.

37. The method of Claims 32 wherein said toppings disk is refrigerated without being frozen during storage.

38. The method of Claim 32 wherein said toppings disk is frozen during storage.

39. The method of Claim 32 wherein a third quantity of cheese is combined with said plurality of pizza toppings prior to applying said plurality of pizza toppings to said first layer of cheese.

40. A pizza toppings disk comprising:
a quantity of cheese appropriately shaped to be placed on top of a pizza shell; and
a plurality of pizza toppings selected from the group consisting of sliced meats, ground meats, and vegetables as well as combinations thereof;
wherein said quantity of cheese and said pizza toppings are fused together to form a toppings disk for storing and subsequent use in assembling a pizza.

41. The pizza toppings disk of Claim 4, wherein said quantity of cheese and said pizza toppings are fused together by softening said quantity of cheeses and resolidifying said quantity of cheeses.

42. The pizza toppings disk of Claim 40, wherein said quantity of cheese and said pizza toppings are fused together by a food safe adhesive.

43. The toppings disk of Claim 40, wherein the quantity of cheese is provided in a bottom layer (14) and a top layer (20), which top layer is applied on top of the pizza toppings (18) and the bottom layer.

44. The pizza toppings disk of Claim 43, wherein said quantities of cheese and said pizza toppings are fused together by softening said quantities of cheeses and resolidifying quantities of cheeses.

45. The pizza toppings disk of Claim 43, wherein said quantities of cheese and said pizza toppings are fused together by a food safe adhesive.

46. The pizza toppings disk of Claim 43, further comprising a third quantity of cheese which is mixed with said plurality of pizza toppings selected from the group consisting of sliced meat, ground meats, and vegetables as well as combinations thereof prior to being dispersed over said bottom layer of cheese.

47. An apparatus for making a pizza toppings disk comprising:
automated means for transporting a non-edible forming surface;
cheese depositing means for depositing a layer of cheese onto said non-edible forming surface in a predetermined shape;
pizza toppings depositing means for depositing a plurality of pizza toppings onto said non-edible forming surface, said pizza toppings selected from the group consisting of sliced meats, ground meats, and vegetables as well as combinations thereof;
fusing means for fusing together said layer of cheese and said pizza toppings to thereby form a pizza toppings disk without baking the cheese or pizza toppings.

48. The apparatus of Claim 47, further comprising second cheese depositing means (150) for depositing a second layer of cheese on top of the pizza toppings and the first layer of cheese.

49. The apparatus of Claim 48, further comprising a freezing means for freezing said toppings disk such that said disk may be stored for subsequent use.

50. The apparatus of Claim 48, wherein said cooling means is a chilling means for chilling and setting the surface of the pizza toppings disk prior to freezing said disk.

51. The apparatus of Claim 47, further comprising cooling means (185) for cooling the toppings disk after fusing.

52. The apparatus of Claim 51, wherein said cooling means is a chilling means for chilling and thereby setting the surface of the pizza toppings disk.

53. The apparatus of Claim 51, further comprising a freezing means for freezing said toppings disk such that said disk may be stored for subsequent use.

54. The apparatus of Claim 47, wherein said cheese depositing means includes at least one template (162) having an opening of a predetermined shape such that the cheese being deposited on the forming surface is deposited in the appropriate shape.

55. The apparatus of Claim 54, further comprising:
template moving mans, for moving the template such that said templates are synchronized to travel in the same direction and at the same speed as the surface onto which the item being deposited in travelling.

56. The apparatus of Claim 54, wherein the conveyor means includes a cam follower having at rack which aligns the orientation of the said templates as said templates travel in a loop.

57. The apparatus of Claim 47 wherein the non-edible forming surface is a sheet of disposable material and wherein the apparatus further comprises means for feeding individual sheets of said disposable material to the means for transporting the non-edible forming surface.

58. The apparatus of Claim 47 wherein the disposable material is paper.

59. The apparatus of Claim 47 wherein the non-edible forming surface is a pan.

60. The method of Claim 1, used for making pizza for a plurality of pizza outlets comprising the following steps:
at a central location, combining the quantities of cheese (14) with the pluralities of pizza toppings (18) on a surface (16), said layers being appropriately shaped to be placed on pizza shells (24); fusing said quantities of cheese and pizza toppings to thereby form toppings disks (10); refrigerating said toppings disks;
shipping said toppings disks to said plurality of pizza outlets;
at each of said pizza outlets, providing pizza shells; assembling said pizza topping disks (10) and said pizza shells (24) to form uncooked pizzas; and baking said uncooked pizzas.

61. The method of Claim 60, wherein the quantities of cheese and pizza toppings are fused by thermally softening and resolidifying the cheese.

62. The method of Claim 60, wherein the pizza toppings disks are frozen before being shipped.

63. The method of Claim 60, wherein the pizza toppings disks do not include pizza sauce.

64. The method of Claim 60, wherein a layer of pizza sauce is applied between the pizza shells and the pizza toppings disks.

## Patentansprüche

1. Ein Verfahren zur Herstellung einer Pizza, indem ein Boden gebacken wird, auf dem Käse und Pizzabeläge sind, **gekennzeichnet durch** Durchführen der folgenden Schritte:
Kombinieren einer Menge Käse (14) mit einer Mehrzahl von Pizzabelägen (18), die aus der Gruppe ausgewählt sind, die aus geschnittenen Zutaten, passierten Zutaten und Gemüsen besteht, sowie von Kombinationen davon, zu einer Schicht auf einer Oberfläche (16), wobei die genannte Schicht geeignet geformt wird, um auf einem Pizzaboden (24) angeordnet zu werden;
Schmelzen der genannten Menge an Käse und Pizzabelägen, um dadurch eine Belagscheibe (10) zu bilden;
Aufbewahren der genannten Belagscheibe (10) zur nachfolgenden Verwendung;
Bereitstellen eines Pizzabodens (24);
Zusammensetzen der genannten Pizzabelagscheibe (10) und des genannten Pizzabodens (24), um eine ungebackene Pizza zu bilden; und
Backen der genannten ungebackenen Pizza.

2. Das Verfahren des Anspruchs 1, worin die genannte Menge an Käse geriebenen Käse einschließt.

3. Das Verfahren des Anspruchs 1, worin die genannte Menge an Käse in Scheiben geschnittenen Käse einschließt.

4. Das Verfahren des Anspruchs 1, worin die genannte Menge an Käse und die genannten Pizzabeläge zusammengeschmolzen werden, indem die genannte Menge an Käse erweicht und die genannte Menge an Käse erneut verfestigt wird.

5. Das Verfahren des Anspruchs 1, worin die genannte Menge an Käse und die genannten Pizzabeläge durch ein lebensmittelechtes Klebemittel verschmolzen werden.

6. Das Verfahren des Anspruchs 1, worin die genannte Belagscheibe während der Aufbewahrung gekühlt wird, ohne gefroren zu werden.

7. Das Verfahren des Anspruchs 1, worin die genannte Belagscheibe während der Aufbewahrung gefroren wird.

8. Das Verfahren des Anspruchs 1, worin Pizzasoße zwischen die Belagscheibe und den Boden eingebracht wird.

9. Das Verfahren des Anspruchs 1, worin eine erste Menge an Käse (14) zu einer Schicht geformt wird, eine Mehrzahl von Pizzabelägen (18) oben auf die genannte Schicht der ersten Menge an Käse aufgebracht wird und eine zweite Menge an Käse (20) oben auf die genannte Käseschicht und die Pizzabeläge aufgebracht wird.

10. Das Verfahrens des Anspruchs 9, das ferner die Schritte umfaßt:
Kombinieren einer dritten Menge an Käse mit der genannten Mehrzahl von Pizzabelägen, bevor die genannte Mehrzahl von Pizzabelägen auf die genannte erste Käseschicht aufgebracht wird.

11. Das Verfahren des Anspruchs 9, worin die genannten Käsemengen geriebenen Käse einschließen.

12. Das Verfahren des Anspruchs 9, worin die genannten Käsemengen in Scheiben geschnittenen Käse einschließen.

13. Das Verfahren des Anspruchs 9, worin die genannten Mengen an Käse und die genannten Pizzabeläge zusammengeschmolzen werden, indem die genannten Mengen an Käse erweicht und die genannten Mengen an Käse erneut verfestigt werden.

14. Das Verfahren des Anspruchs 9, worin die genannten Mengen an Käse und die genannten Pizzabeläge durch ein lebensmittelechtes Klebemittel verschmolzen werden.

15. Das Verfahren des Anspruchs 9, worin die genannte Belagscheibe während der Aufbewahrung gekühlt wird, ohne gefroren zu werden.

16. Das Verfahren des Anspruchs 9, worin die genannte Belagscheibe während der Aufbewahrung gefroren wird.

17. Das Verfahren des Anspruchs 9, worin Pizzasoße zwischen die Belagscheibe und den Boden eingebracht wird.

18. Ein Verfahren zur Herstellung einer Pizzabelagscheibe zur nachfolgenden Verwendung beim Zusammensetzen einer Pizza, **gekennzeichnet durch** Durchführen der folgenden Schritte:
Kombinieren einer Menge Käse (14) mit einer Menge von Pizzabelägen (18), die aus der Gruppe ausgewählt sind, die aus geschnittenen Zutaten, passierten Zutaten und Gemüsen besteht, sowie von Kombinationen davon, zu einer Schicht auf einer Oberfläche (16), wobei die genannte Schicht geeignet geformt wird, um auf einem Pizzaboden (24) angeordnet zu werden;
Schmelzen der genannten Menge an Käse und Pizzabelägen, um dadurch eine Belagscheibe (10) zu bilden; und
Aufbewahren der genannten Belagscheibe (10) zur nachfolgenden Verwendung beim Zusammensetzen einer Pizza;

19. Das Verfahren des Anspruchs 18, worin die genannte Menge an Käse geriebenen Käse einschließt.

20. Das Verfahren des Anspruchs 18, worin die genannte Menge an Käse in Scheiben geschnittenen Käse einschließt.

21. Das Verfahren des Anspruchs 18, worin die genannte Menge an Käse und die genannten Pizzabeläge zusammengeschmolzen werden, indem die genannte Menge an Käse erweicht und die genannte Menge an Käse erneut verfestigt wird.

22. Das Verfahren des Anspruchs 18, worin die genannte Menge an Käse und die genannten Pizzabeläge durch ein lebensmittelechtes Klebemittel verschmolzen werden.

23. Das Verfahren des Anspruchs 18, worin die genannte Belagscheibe während der Aufbewahrung gekühlt wird, ohne gefroren zu werden.

24. Das Verfahren des Anspruchs 18, worin die genannte Belagscheibe während der Aufbewahrung gefroren wird.

25. Das Verfahren des Anspruchs 18, worin eine erste Menge an Käse (14) zu einer Schicht auf der Oberfläche gebildet wird und die Mehrzahl von Pizzabelägen (18) oben auf die Schicht der ersten Menge an Käse aufgebracht werden.

26. Das Verfahren des Anspruchs 25, worin die genannte Käseschicht geriebenen Käse einschließt.

27. Das Verfahren des Anspruchs 25, worin die genannte Käseschicht in Scheiben geschnittenen Käse einschließt.

28. Das Verfahren des Anspruchs 25, worin die genannte Menge an Käse und die genannten Pizzabeläge zusammengeschmolzen werden, indem die genannte Menge an Käse erweicht und die genannte Menge an Käse erneut verfestigt wird.

29. Das Verfahren des Anspruchs 25, worin die genannte Menge an Käse und die genannten Pizzabeläge durch ein lebensmittelechtes Klebemittel Verschmolzen werden.

30. Das Verfahren des Anspruchs 25, worin die genannte Belagscheibe während der Aufbewahrung gekühlt wird, ohne gefroren zu werden.

31. Das Verfahren des Anspruchs 25, worin die genannte Belagscheibe während der Aufbewahrung gefroren wird.

32. Das Verfahren des Anspruchs 25, worin eine zweite Menge an Käse (20) oben auf die erste Käseschicht und die Pizzabeläge aufgebracht wird.

33. Das Verfahren des Anspruches 32, worin die genannten Käsemengen geriebenen Käse einschließen.

34. Das Verfahren des Anspruchs 32, worin die genannten Käsemengen in Scheiben geschnittenen Käse einschließen.

35. Das Verfahren des Anspruchs 32, worin die genannten Mengen an Käse und die genannten Pizzabeläge zusammengeschmolzen werden, indem die genannten Mengen an Käse erweicht und die genannten Mengen an Käse erneut verfestigt werden.

36. Das Verfahren des Anspruchs 32, worin die genannten Mengen an Käse und die genannten Pizzabeläge durch ein lebensmittelechtes Klebemittel verschmolzen werden.

37. Das Verfahren des Anspruchs 32, worin die genannte Belagscheibe während der Aufbewahrung gekühlt wird, ohne gefroren zu werden.

38. Das Verfahren des Anspruchs 32, worin die genannte Belagscheibe während der Aufbewahrung gefroren wird.

39. Das Verfahren des Anspruchs 32, worin eine dritte Menge an Käse mit der genannten Mehrzahl von Pizzabelägen kombiniert wird, bevor die genannte Mehrzahl von Pizzabelägen auf die genannte erste Käseschicht aufgebracht wird.

40. Eine Pizzabelagscheibe, umfassend:
eine Menge an Käse, die geeignet geformt ist, um oben auf einem Pizzaboden angeordnet zu werden; und
ein Mehrzahl von Pizzabelägen, die aus der Gruppe ausgewählt sind, die aus geschnittenen Zutaten, passierten Zutaten und Gemüsen besteht, sowie aus Kombinationen davon;
worin die genannte Menge an Käse und die genannten Pizzabeläge zusammengeschmolzen werden, um eine Belagscheibe zum Aufbewahren und zur nachfolgenden Verwendung beim Zusammensetzen einer Pizza zu bilden.

41. Die Pizzabelagscheibe des Anspruchs 40, worin die genannte Menge an Käse und die genannten Pizzabeläge zusammengeschmolzen werden, indem die genannten Mengen an Käse erweicht und die genannten Mengen an Käse erneut verfestigt werden.

42. Die Pizzabelagscheibe des Anspruchs 40, worin die genannte Menge an Käse und die genannten Pizzabeläge durch ein lebensmittelechtes Klebemittel zusammengeschmolzen werden.

43. Die Pizzabelagscheibe des Anspruchs 40, worin die Menge an Käse in einer unteren Schicht (14) und einer oberen Schicht (20) vorgesehen ist, wobei die obere Schicht oben auf die Pizzabeläge (18) und die untere Schicht aufgebracht wird.

44. Die Pizzabelagscheibe des Anspruchs 43, worin die genannten Mengen an Käse und die genannten Pizzabeläge zusammengeschmolzen werden, indem die genannten Mengen an Käse erweicht und die genannten Mengen an Käse erneut verfestigt werden.

45. Die Pizzabelagscheibe des Anspruchs 43, worin die genannten Mengen an Käse und die genannten Pizzabeläge durch ein lebensmittelechtes Klebemittel verschmolzen werden.

46. Die Pizzabelagscheibe des Anspruchs 43, die des weiteren eine dritte Menge an Käse umfaßt, die mit der genannten Mehrzahl von Pizzabelägen vermischt ist, die aus der Gruppe ausgewählt sind, die aus geschnittenen Zutaten, passierten Zutaten und Gemüsen besteht, sowie aus Kombinationen davon, bevor sie über der genannten unteren Käseschicht zerstreut werden.

47. Eine Vorrichtung zur Herstellung einer Pizzabelagscheibe, umfassend:
eine automatisierte Vorrichtung zum Transport einer nicht eßbaren Formungsoberfläche;
eine Käseabsetzvorrichtung zum Absetzen einer Schicht aus Käse auf der genannten nicht eßbaren Formungsoberfläche in einer vorbestimmten Form;
eine Absetzvorrichtung für Pizzabeläge zum Absetzen einer Mehrzahl von Pizzabelägen auf der genannten nicht eßbaren Formungsoberfläche, wobei die genannten Pizzabeläge aus der Gruppe ausgewählt sind, die aus geschnittenen Zutaten, passierten Zutaten und Gemüsen besteht, sowie von Kombinationen davon;
eine Schmelzeinrichtung zum Zusammenschmelzen der genannten Schicht aus Käse und der genannten Pizzabeläge, um dadurch eine Pizzabelagscheibe zu formen, ohne den Käse oder die Pizzabeläge zu backen.

48. Die Vorrichtung des Anspruchs 47, ferner umfassend eine zweite Käseabsetzvorrichtung (150) zum Absetzen einer zweiten Schicht aus Käse oben auf den Pizzabelägen und der ersten Käseschicht.

49. Die Vorrichtung des Anspruchs 48, ferner umfassend eine Gefriereinrichtung zum Einfrieren der genannten Belagscheibe, so daß die genannte Belagscheibe zur nachfolgenden Verwendung aufbewahrt werden kann.

50. Die Vorrichtung des Anspruchs 48, worin die genannte Kühleinrichtung eine Starkkühleinrichtung ist, um die Oberfläche der Pizzabelagscheibe vor dem Einfrieren der genannten Scheibe stark abzukühlen und festzulegen.

51. Die Vorrichtung des Anspruchs 47, ferner umfassend eine Kühleinrichtung (185) zum Kühlen der Belagscheibe nach dem Schmelzen.

52. Die Vorrichtung des Anspruchs 51, worin die genannte Kühleinrichtung eine Starkkühleinrichtung umfaßt, um die Oberfläche der Pizzabelagscheibe stark abzukühlen und dadurch festzulegen.

53. Die Vorrichtung des Anspruchs 51, ferner umfassend eine Gefriereinrichtung zum Einfrieren der genannten Belagscheibe, so daß die genannte Belagscheibe zur nachfolgenden Verwendung aufbewahrt werden kann.

54. Die Vorrichtung des Anspruchs 47, worin die genannte Käseabsetzvorrichtung wenigstens eine Schablone (162) einschließt, die eine Öffnung einer vorbestimmten Form aufweist, so daß der Käse, der auf der Formungsoberfläche abgesetzt wird, in der richtigen Form abgesetzt wird.

55. Die Vorrichtung des Anspruchs 54, ferner umfassend:
eine Schablonenbewegungsvorrichtung, um die Schablone so zu bewegen, daß die genannten Schablonen synchronisiert sind, sich in der gleichen Richtung und mit der gleichen Geschwindigkeit wie die Oberfläche zu bewegen, auf der der Gegenstand bei Bewegung abgesetzt wird.

56. Die Vorrichtung des Anspruchs 54, worin die Fördervorrichtung einen Kurvenfolger einschließt, der ein Gestellt aufweist, das die Ausrichtung der genannten Schablonen ausrichtet, wenn sich die genannten Schablonen in einer Schleife bewegen.

57. Die Vorrichtung des Anspruches 47, worin die nicht eßbare Formungsoberfläche ein flächiges Element eines wegwerfbaren Materials ist und worin die Vorrichtung ferner eine Vorrichtung zum Zuführen einzelner flächiger Elemente des genannten wegwerfbaren Materials zu der Vorrichtung zum Transportieren der nicht eßbaren Formungsoberfläche umfaßt.

58. Die Vorrichtung des Anspruches 47, worin das wegwerfbare Material Papier ist.

59. Die Vorrichtung des Anspruchs 47, worin die nicht eßbare Formungsoberfläche eine Pfanne ist.

60. Das Verfahren des Anspruchs 1, das zur Pizzaherstellung für eine Mehrzahl von Pizzaauslässen verwendet wird und die folgenden Schritte umfaßt:
an einem zentralen Ort kombinieren der Mengen an Käse (14) mit der Mehrzahl von Pizzabelägen (18) auf einer Oberfläche (16), wobei die genannten Schichten geeignet geformt werden, um auf Pizzaböden (24) angeordnet zu werden; Schmelzen der genannten Mengen an Käse und Pizzabelägen, um dadurch Belagscheiben (10) zu bilden; Kühlen der genannten Belagscheiben;
Versenden der genannten Belagscheiben zu der genannten Mehrzahl von Pizzaausgängen;
an jedem der genannten Pizzaausgänge Bereitstellen von Pizzaböden; Zusammensetzen der genannten Pizzabelagscheiben (10) und der genannten Pizzaböden (24), um ungebackene Pizzen zu bilden; und Backen der genannten ungebackenen Pizzen.

61. Das Verfahren des Anspruchs 60, worin die Mengen an Käse und Pizzabelägen durch Erweichen durch Wärme und erneutes Verfestigen des Käses verschmolzen werden.

62. Das Verfahren des Anspruchs 60, worin Pizzabelagscheiben gefroren werden, bevor sie versandt werden.

63. Das Verfahren des Anspruchs 60, worin die Pizzabelagscheiben keine Pizzasoße einschließen.

64. Das Verfahren des Anspruchs 60, worin eine Schicht Pizzasoße zwischen die Pizzaböden und die Pizzabelagscheiben aufgebracht wird.

## Revendications

1. Procédé de fabrication d'une pizza par cuisson d'une galette ayant du fromage et des garnitures de pizza à sa surface, caractérisé par l'exécution des étapes suivantes :
la combinaison d'une quantité de fromage (14) à plusieurs garnitures de pizza (18) choisies dans le groupe constitué des tranches d'aliments, des aliments hachés et des légumes ainsi que de leurs combinaisons, sous forme d'une couche sur une surface (16) , la couche ayant une configuration convenant à sa disposition sur une galette de pizza (24),
l'association par fusion de la quantité de fromage et des garnitures de pizza pour la formation d'un disque de garniture (10),
la conservation du disque de garniture (10) pour une utilisation ultérieure,
la disposition d'une galette de pizza (24),
l'assemblage du disque de garniture de pizza (10) et de la galette de pizza (24) pour la formation d'une pizza non cuite, et
la cuisson de la pizza non cuite.

2. Procédé selon la revendication 1, dans lequel la quantité de fromage comprend du fromage râpé.

3. Procédé selon la revendication 1, dans lequel la quantité de fromage comprend du fromage en tranches.

4. Procédé selon la revendication 1, dans lequel la quantité de fromage et les garnitures de pizza sont associées par fusion par ramollissement de la quantité de fromage et par solidification à nouveau de la quantité de fromage.

5. Procédé selon la revendication 1, dans lequel la quantité de fromage et les garnitures de pizza sont associées par fusion par un adhésif de qualité alimentaire.

6. Procédé selon la revendication 1, dans lequel le disque de garniture est réfrigéré sans être congelé pendant le stockage.

7. Procédé selon la revendication 1, dans lequel le disque de garniture est congelé pendant le stockage.

8. Procédé selon la revendication 1, dans lequel de la sauce de pizza est appliquée entre le disque de garniture et la galette.

9. Procédé selon la revendication 1, dans lequel une première quantité de fromage (14) est mise sous forme d'une couche, plusieurs garnitures de pizza (18) sont appliquées sur la couche de la première quantité de fromage, et une seconde quantité de fromage (20) est appliquée sur la première couche de fromage et les garnitures de pizza.

10. Procédé selon la revendication 9, comprenant en outre la combinaison d'une troisième quantité de fromage aux garnitures de pizza avant l'application des garnitures de pizza sur la première couche de fromage.

11. Procédé selon la revendication 9, dans lequel les quantités de fromage comprennent du fromage râpé.

12. Procédé selon la revendication 9, dans lequel les quantités de fromage comprennent du fromage en tranches.

13. Procédé selon la revendication 9, dans lequel les quantités de fromage et les garnitures de pizza sont associées par fusion par ramollissement des quantités de fromage et par nouvelle solidification des quantités de fromage.

14. Procédé selon la revendication 9, dans lequel les quantités de fromage et les garnitures de pizza sont associées par fusion par un adhésif de qualité alimentaire.

15. Procédé selon la revendication 9, dans lequel le disque de garniture est réfrigéré sans être congelé pendant le stockage.

16. Procédé selon la revendication 9, dans lequel le disque de garniture est congelé pendant le stockage.

17. Procédé selon la revendication 9, dans lequel de la sauce à pizza est appliquée entre le disque de garniture et la galette.

18. Procédé de fabrication d'un disque de garniture de pizza destiné à être utilisé ultérieurement lors de l'assemblage d'une pizza, caractérisé par l'exécution des étapes suivantes :
la combinaison d'une quantité de fromage (14) avec des garnitures de pizza (18) choisies dans le groupe qui comprend les tranches d'aliments, les aliments hachés et les légumes et leurs combinaisons, sous forme d'une couche placée sur une surface (16), la couche ayant une configuration convenant à sa disposition sur la galette de pizza (24),
l'association par fusion de la quantité de fromage et des garnitures de pizza pour la formation d'un disque de garniture (10), et
la conservation du disque de garniture (10) afin qu'il soit utilisé ultérieurement pour l'assemblage d'une pizza.

19. Procédé selon la revendication 18, dans lequel la quantité de fromage contient du fromage râpé.

20. Procédé selon la revendication 18, dans lequel la quantité de fromage contient des tranches de fromage.

21. Procédé selon la revendication 18, dans lequel la quantité de fromage et les garnitures de pizza sont associées par fusion par ramollissement de la quantité de fromage et nouvelle solidification de la quantité de fromage.

22. Procédé selon la revendication 18, dans lequel la quantité de fromage et les garnitures sont associées par fusion par un adhésif de qualité alimentaire.

23. Procédé selon la revendication 18, dans lequel le disque de garniture est réfrigéré sans être congelé pendant le stockage.

24. Procédé selon la revendication 18, dans lequel le disque de garniture est congelé pendant le stockage.

25. Procédé selon la revendication 18, dans lequel une première quantité de fromage (14) est mise sous forme d'une couche sur la surface, et les garnitures de pizza (18) sont appliquées sur la couche de la première quantité de fromage.

26. Procédé selon la revendication 25, dans lequel la couche de fromage contient du fromage râpé.

27. Procédé selon la revendication 25, dans lequel la couche de fromage contient des tranches de fromage.

28. Procédé selon la revendication 25, dans lequel la quantité de fromage et les garnitures de pizza sont associées par fusion par ramollissement de la quantité de fromage et nouvelle solidification des quantités de fromage.

29. Procédé selon la revendication 25, dans lequel la quantité de fromage et les garnitures de pizza sont associées par fusion par un adhésif de qualité alimentaire.

30. Procédé selon la revendication 25, dans lequel le disque de garniture est réfrigéré sans être congelé pendant le stockage.

31. Procédé selon la revendication 25, dans lequel le disque de garniture est congelé pendant le stockage.

32. Procédé selon la revendication 25, dans lequel une seconde quantité de fromage (20) est appliquée à la partie supérieure de la première couche de fromage et des garnitures de pizza.

33. Procédé selon la revendication 32, dans lequel les quantités de fromage comprennent du fromage râpé.

34. Procédé selon la revendication 32, dans lequel les quantités de fromage comprennent du fromage en tranches.

35. Procédé selon la revendication 32, dans lequel les quantités de fromage et les garnitures de pizza sont associées par fusion par ramollissement des quantités de fromage et nouvelle solidification des quantités de fromage.

36. Procédé selon la revendication 32, dans lequel les quantités de fromage et les garnitures de pizza sont associées par fusion par un adhésif de qualité alimentaire.

37. Procédé selon la revendication 32, dans lequel le disque de garniture est réfrigéré sans être congelé en cours de stockage.

38. Procédé selon la revendication 32, dans lequel le disque de garniture est congelé en cours de stockage.

39. Procédé selon la revendication 32, dans lequel une troisième quantité de fromage est combinée aux garnitures de pizza avant l'application des garnitures de pizza à la première couche de fromage.

40. Disque de garniture de pizza, comprenant :
une quantité de fromage de forme convenant à la mise en place sur une galette de pizza, et
plusieurs garnitures de pizza choisies dans le groupe comprenant des tranches d'aliments, des aliments hachés et des légumes ainsi que leurs combinaisons,
dans lequel la quantité de fromage et les garnitures de pizza sont associées par fusion pour la formation d'un disque de garniture destiné à être stocké et utilisé ultérieurement pour l'assemblage d'une pizza.

41. Disque de garniture de pizza selon la revendication 40, dans lequel la quantité de fromage et les garnitures de pizza sont associées par fusion par ramollissement de la quantité de fromage et nouvelle solidification de la quantité de fromage.

42. Disque de garniture de pizza selon la revendication 40, dans lequel la quantité de fromage et les garnitures de pizza sont associées par fusion à l'aide d'un adhésif de qualité alimentaire.

43. Disque de garniture de pizza selon la revendication 40, dans lequel la quantité de fromage est placée dans une couche inférieure (14) et une couche supérieure (20), la couche supérieure étant appliquée sur les garnitures de pizza (18) et la couche inférieure.

44. Disque de garniture de pizza selon la revendication 43, dans lequel les quantités de fromage et les garnitures de pizza sont associées par fusion par ramollissement des quantités de fromage et nouvelle solidification des quantités de fromage.

45. Disque de garniture de pizza selon la revendication 43, dans lequel les quantités de fromage et les garnitures de pizza sont associées par fusion par un adhésif de qualité alimentaire.

46. Disque de garniture de pizza selon la revendication 43, comprenant en outre une troisième quantité de fromage qui est mélangée aux garnitures de pizza choisies dans le groupe formé par les tranches d'aliments, les aliments hachés et les légumes et leurs combinaisons, avant dispersion sur la couche inférieure de fromage.

47. Appareil de fabrication de disques de garniture de pizza, comprenant :
un dispositif automatique de transport d'une surface non comestible de mise en forme,
un dispositif de dépôt de fromage destiné à déposer une couche de fromage sur la surface non comestible de mise en forme avec une configuration prédéterminée,
un dispositif de dépôt de garnitures de pizza sur la surface non comestible de mise en forme, les garnitures de pizza étant choisies dans le groupe qui comprend les tranches d'aliments, les aliments hachés et les légumes ainsi que leurs combinaisons, et
un dispositif de fusion destiné à associer par fusion la couche de fromage et les garnitures de pizza avec formation de cette manière d'un disque de garniture de pizza sans cuisson du fromage ou des garnitures de pizza.

48. Appareil selon la revendication 47, comprenant en outre un second dispositif (150) de dépôt de fromage destiné à déposer une seconde couche de fromage sur les garnitures de pizza et la première couche de fromage.

49. Appareil selon la revendication 48, comprenant en outre un dispositif de congélation du disque de garniture afin que le disque puisse être stocké pour être utilisé ultérieurement.

50. Appareil selon la revendication 48, dans lequel le dispositif de refroidissement est un dispositif de refroidissement et de préparation de la surface du disque de garniture de pizza avant congélation du disque.

51. Appareil selon la revendication 47, comprenant en outre un dispositif (185) destiné à refroidir le disque de garniture après association par fusion.

52. Appareil selon la revendication 51, dans lequel le dispositif de refroidissement est un dispositif destiné à refroidir et à préparer la surface du disque de garniture de pizza.

53. Appareil selon la revendication 51, comprenant en outre un dispositif de congélation du disque de garniture de manière que le disque puisse être stocké pour être utilisé ultérieurement.

54. Appareil selon la revendication 47, dans lequel le dispositif de dépôt de fromage comprend au moins un gabarit (162) ayant une ouverture de configuration prédéterminée afin que le fromage en cours de dépôt sur la surface de mise en forme soit déposé avec la configuration appropriée.

55. Appareil selon la revendication 54, comprenant en outre un dispositif de déplacement du gabarit de manière que des gabarits se déplacent de manière synchronisée dans la même direction et à la même vitesse que la surface sur laquelle est déposé l'élément pendant le transport.

56. Appareil selon la revendication 54, dans lequel le dispositif de transport comprend un toucheau de came ayant une crémaillère assurant l'alignement de l'orientation des gabarits lorsque les gabarits se déplacent suivant une boucle.

57. Appareil selon la revendication 47, dans lequel la surface non comestible de mise en forme est une feuille d'un matériau jetable, et dans lequel l'appareil comporte en outre un dispositif destiné à faire avancer les feuilles individuelles du matériau jetable vers le dispositif de transport de la surface non comestible de mise en forme.

58. Appareil selon la revendication 47, caractérisé en ce que le matériau jetable est formé de papier.

59. Appareil selon la revendication 47, dans lequel la surface non comestible de mise en forme est un plat.

60. Procédé selon la revendication 1, utilisé pour la fabrication de pizzas destinées à plusieurs débits de pizzas, comprenant les étapes suivantes :
à un emplacement central, la combinaison des quantités de fromage (14) à des garnitures de pizza (18) sur une surface (16), les couches étant mises à des configurations convenant à leur disposition sur des galettes de pizza (24), l'association par fusion des quantités de fromage et des garnitures de pizza pour la formation de disques de garniture (10), et la réfrigération des disques de garniture,
l'expédition des disques de garniture aux débits de pizzas, et
à chaque débit de pizza, la disposition de galettes de pizza, l'assemblage des disques de garniture de pizza (10) et des galettes de pizza (24) pour la formation de pizzas non cuites, et la cuisson des pizzas non cuites.

61. Procédé selon la revendication 60, dans lequel les quantités de fromage et de garnitures de pizza sont associées par fusion par ramollissement thermique et nouvelle solidification du fromage.

62. Procédé selon la revendication 60, dans lequel les disques de garniture de pizza sont congelés avant d'être expédiés.

63. Procédé selon la revendication 60, dans lequel les disques de garniture de pizza ne comprennent pas de sauce a pizza.

64. Procédé selon la revendication 60, dans lequel une couche de sauce à pizza est appliquée entre les galettes de pizza et les disques de garniture de pizza.
